# EUROPEAN PATENT APPLICATION

(11) **EP 2 352 079 A1**
(43) Date of publication of application: **03.08.2011**
(21) Application number: 09823585.6
(22) Date of filing: 27.10.2009
(51) Int. Cl.: G06F 3/048, G06F 3/041, H04M 1/00

(54) **DISPLAY DEVICE, AND PORTABLE TERMINAL**

(30) Priority: 27.10.2008 JP 2008276011
(71) Applicant: Sharp Kabushiki Kaisha, Osaka-shi, Osaka 545-8522 (JP)
(72) Inventor: HONDA, Toshiyuki, Osaka 545-8522 (JP); HAYAMI, Hideki, Osaka 545-8522 (JP)
(74) Representative: Müller - Hoffmann & Partner
(86) International application number: PCT/JP2009/068418
(87) International publication number: WO 2010/050475

(57) **Abstract**

A display device in accordance with the present invention includes: a timer (106) for measuring a time period from a time at a start of a touch, i.e., from a time when a state in which a point on a touch panel (104) is touched is detected; a display control section (102) for obtaining coordinate information indicative of coordinates on a display (101), which coordinates correspond to the point on the touch panel (104); a control section (113) for calculating, from the coordinate information obtained by the display control section (102), an amount of movement of the point; and an enlarge display control section (111) for displaying, in a case where (i) the time period measured by the timer (106) is equal to or longer than a predetermined time period and (ii) the amount of movement of the point calculated by the control section (113) is smaller than a predetermined amount, an enlarged view of a predetermined area such that the predetermined area is displayed on the display (101) in a position different from a position corresponding to the point, the predetermined area having, its center, the coordinates indicated by the coordinate information. This makes it possible to surely select a target link while recognizing an entire browser screen even if the display device is the one with a small screen such as that of a mobile terminal.

## Description

### Technical Field

The present invention relates to a display device including a touch panel.

### Background Art

In recent years, a display device including a touch panel has been widely used. For example, Patent Literature 1 discloses such a touch panel.

Generally, such a display device including the touch panel allows a user, in a case of for example displaying an Internet browser screen, to touch a link on the browser screen so as to obtain a linked page over the Internet and display the linked page on the browser screen.

### Citation List

### Patent Literature 1

Japanese Patent Application Publication, *Tokukai,* No. 2007-4762 A (Publication Date: January 11, 2007)

### Summary of Invention

### Technical Problem

Meanwhile, there have been increasing number of mobile terminals each of which includes the display device including the touch panel.

Note however that, since the display device of a mobile terminal has a small display area, it is difficult for a user to properly touch and select a target link with his/her finger on the Internet browser screen.

In view of this, generally, in a case where a display screen is small like above, an entire display of the display screen is enlarged so that the user can properly touch a target position. In such a case, since the entire display of the display screen is enlarged, it is difficult to recognize an entire display with such a small display screen. Therefore, the display device of the mobile terminal etc. with such a small display screen causes a problem that it is difficult to properly touch and select a target link with a finger while recognizing the entire browser screen.

The present invention has been made in view of the problem, and an object of the present invention is to achieve a display device in which it is possible to surely select a target link while recognizing an entire browser screen even if the display device is the one with a small screen such as that of a mobile terminal.

### Solution to Problem

In order to attain the above object, a display device in accordance with the present invention includes: a display panel; and a touch panel, the display panel and the touch panel being provided so as to be superimposed on each other, said display device, further including: touch detecting means for detecting a state in which a point on the touch panel is touched; a timer for measuring a time period from a time when the touch detecting means detects the state in which the point on the touch panel is touched; coordinate information obtaining means for obtaining coordinate information indicative of coordinates on the display panel, the coordinates corresponding to the point on the touch panel detected by the touch detecting means; movement amount calculating means for calculating, from the coordinate information obtained by the coordinate information obtaining means, an amount of movement of the point; and enlarge display means for displaying, in a case where (i) the time period measured by the timer is equal to or longer than a predetermined time period and (ii) the amount of movement calculated by the movement amount calculating means is smaller than a predetermined amount, an enlarged view of a predetermined area such that the enlarged view is displayed on the display panel in a position different from a position corresponding to the point, the predetermined area having, at its center, the coordinates indicated by the coordinate information.

Note here that the predetermined period and the predetermined amount of movement, with reference to which it is determined whether or not the enlarge display means displays an enlarged view of the point being touched, can be set as appropriate. That is, such period and amount should be determined, in designing the display device, by taking into consideration various factors such as for how long a user should keep touching a point before an enlarged view is displayed so that the user feels comfortable.

The phrase "the time period measured by the timer is equal to or longer than a predetermined time period" means that the touch panel has been touched by a user for a certain period of time. Further, the phrase "the amount of movement calculated by the movement amount calculating means is smaller than a predetermined amount" means that a point being touched by a user has little moved since it started being touched. That is, according to this configuration, in a case where the point being touched by the user has little moved during a certain period of time since the point started being touched, an enlarged view of a predetermined area including the point being touched will be displayed such that the enlarged view is in a position different from that of the point being touched.

Further, it is possible to determine as appropriate the predetermined area, which is to be displayed in the enlarged view in response to a touch action. For example, the predetermined area is preferably determined depending on a size of an entire display area of the display panel.

Accordingly, this configuration enables a user to cause, by keeping touching a desired point on the touch panel for a certain period of time, an enlarged view of an area including the desired point to be displayed on the display panel.

According to this configuration, since an enlarged view of an area around a point touched by the user is displayed without enlarging an entire display of the display panel, the user can surely select an area including a target display (a link) simply by making a touch action while recognizing an entire display.

Further, with a small display screen such as that of a mobile terminal, it is difficult for a user to recognize what is displayed on an area being touched with his/her finger because the area is behind the finger. In this regard, according to the configuration, since an enlarged view of the area being touched with the finger is displayed, it is possible to ensure that the user can recognize what is displayed on the area being touched with his/her finger.

### Advantageous Effects of Invention

As described above, a display device in accordance with the present invention includes: a display panel; and a touch panel, the display panel and the touch panel being provided so as to be superimposed on each other, said display device, further including: touch detecting means for detecting a state in which a point on the touch panel is touched; a timer for measuring a time period from a time when the touch detecting means detects the state in which the point on the touch panel is touched; coordinate information obtaining means for obtaining coordinate information indicative of coordinates on the display panel, the coordinates corresponding to the point on the touch panel detected by the touch detecting means; movement amount calculating means for calculating, from the coordinate information obtained by the coordinate information obtaining means, an amount of movement of the point; and enlarge display means for displaying, in a case where (i) the time period measured by the timer is equal to or longer than a predetermined time period and (ii) the amount of movement calculated by the movement amount calculating means is smaller than a predetermined amount, an enlarged view of a predetermined area such that the enlarged view is displayed on the display panel in a position different from a position corresponding to the point, the predetermined area having, at its center, the coordinates indicated by the coordinate information. According to the configuration, since an enlarged view of an area around a point touched by the user is displayed without enlarging an entire display of the display panel, the user can surely select an area including a target display (a link) simply by making a touch action while recognizing an entire display.

### Brief Description of Drawings

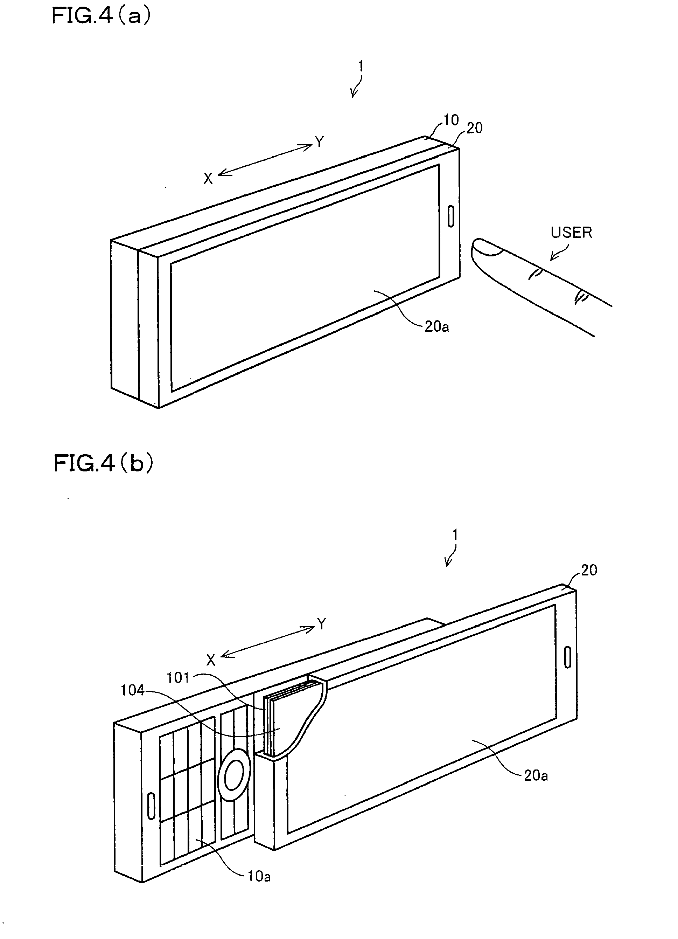

Fig. 1

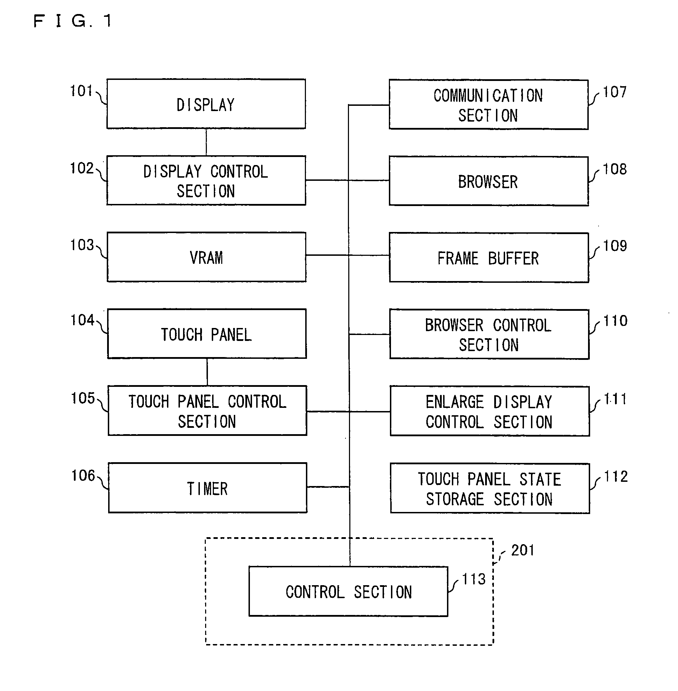

   Fig. 1, showing one embodiment of the present invention, is a block diagram illustrating how a main part of a mobile phone is configured.
Fig. 2

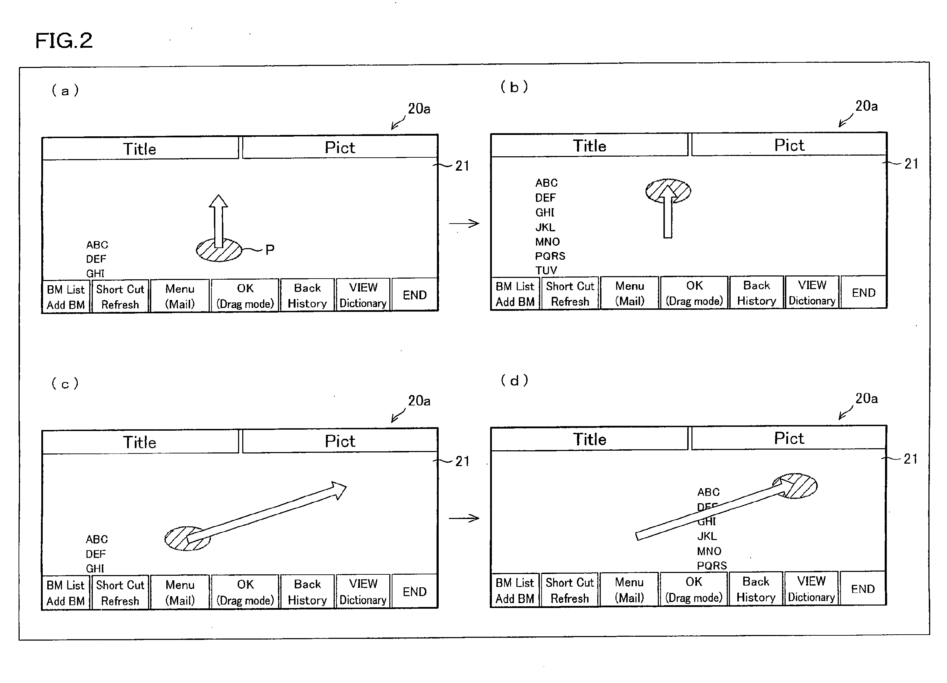

   Fig. 2 is a view illustrating how a panning mode is carried out on the mobile phone of Fig. 1.
Fig. 3

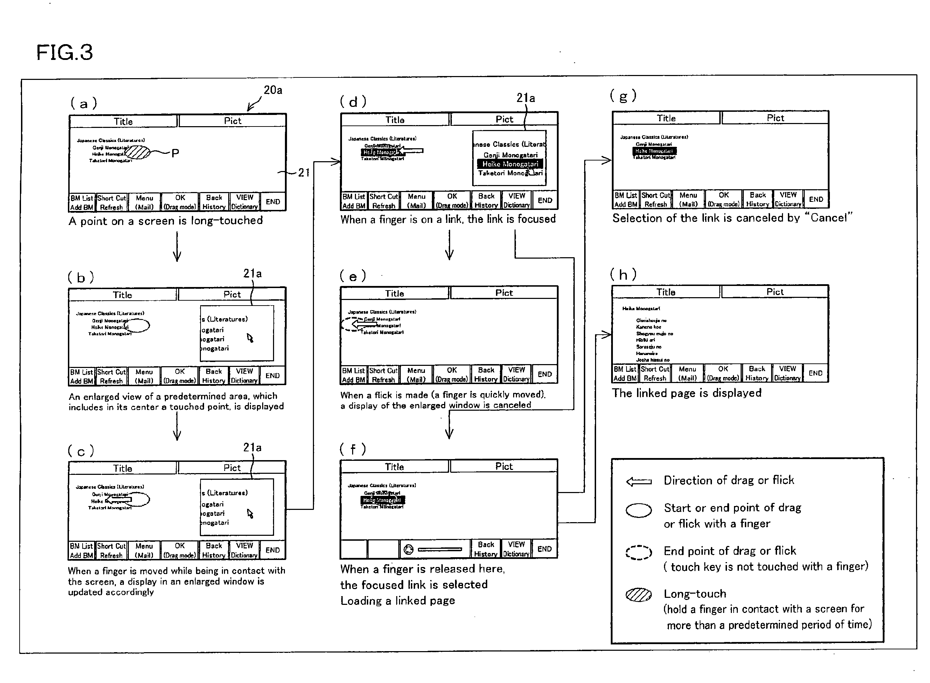

   Fig. 3 is a view illustrating how a partial enlargement display mode is carried out on the mobile phone of Fig .1.
Fig. 4
   (a) of Fig. 4 is a perspective view illustrating overview of the mobile phone of Fig. 1.
   (b) of Fig. 4 is a perspective view illustrating another overview of the mobile phone of Fig. 1.
Fig. 5

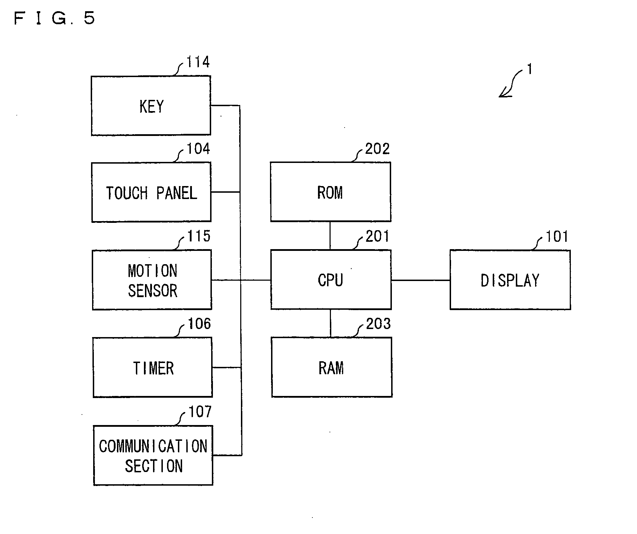

   Fig. 5 is a block diagram schematically illustrating a hardware configuration of the mobile phone of Fig. 1.
Fig. 6

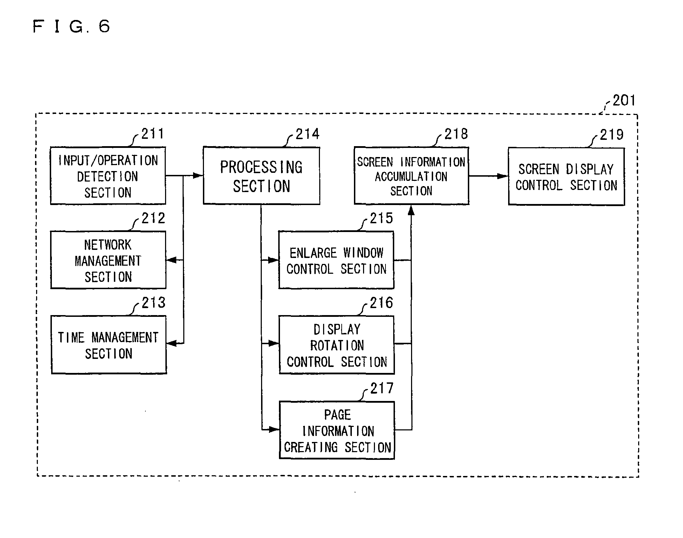

   Fig. 6 is a block diagram schematically illustrating a software configuration of the mobile phone of Fig. 1.
Fig. 7

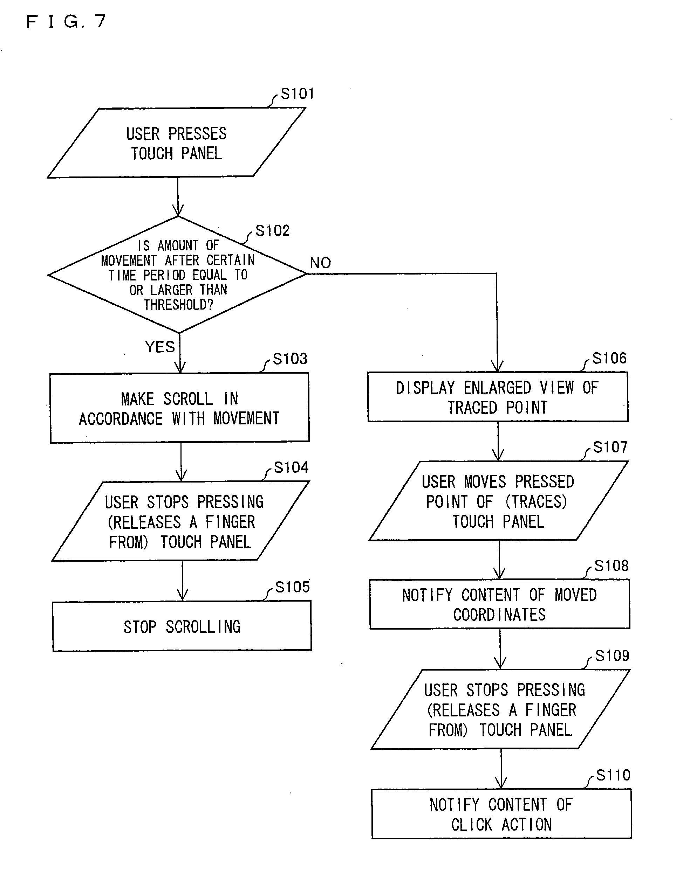

   Fig. 7 is a flowchart illustrating one example of how processes of a touch action are carried out on the mobile phone of Fig. 1.
Fig. 8

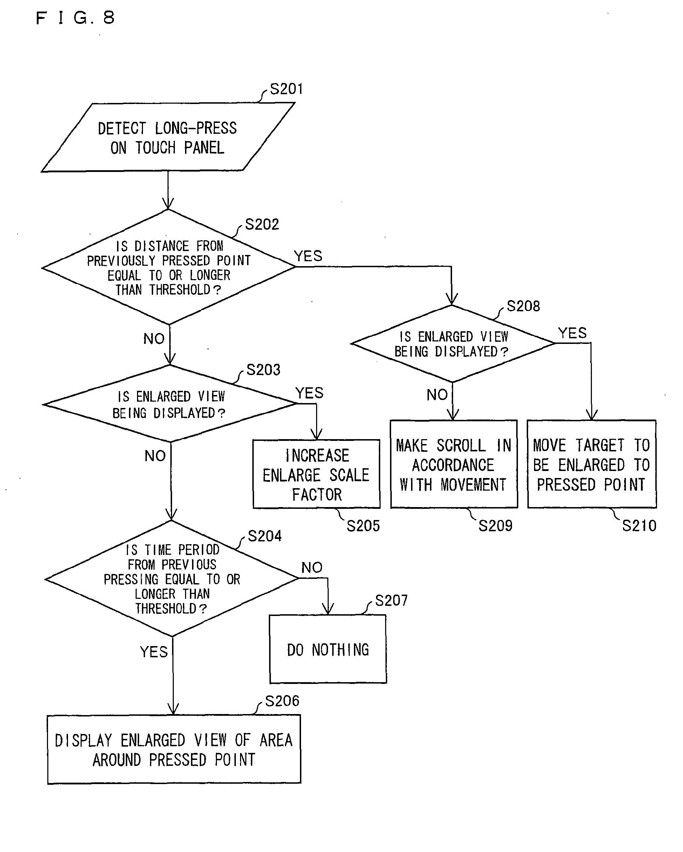

   Fig. 8 is a flowchart illustrating another example of how processes of a touch action are carried out on the mobile phone of Fig. 1.

### Description of Embodiments

The following description discusses one embodiment of the present invention. Note that the present embodiment describes with an example in which an image display device is included in a mobile phone.

### (a) and (b) of Fig. 4 illustrate overview of a mobile phone 1 including an image display device configured like above.

As illustrated in (a) and (b) of Fig. 4, the mobile phone 1 is a slide mobile phone which includes a first outer housing 10 and a second outer housing 20 provided slidably to each other in directions X and Y indicated by a two-headed arrow. Note in the present embodiment that the mobile phone 1 has not only a general calling function and a general emailing function, but also various multimedia functions such as an Internet connecting function, a function of receiving one-segment broadcasting, a function of reproducing a moving image, a function of playing music, a video calling function, and the like.

Note here that, according to the mobile phone 1, (i) a state of (a) of Fig. 4, i.e., a state in which the first outer housing 10 and the second outer housing 20 are completely overlap each other, is referred to as a first state and (ii) a state of (b) of Fig. 4, i.e., a state in which the first outer housing 10 and the second outer housing 20 are slid outward with respect to each other, is referred to as a second state.

For example, in a case of using the calling function or the emailing function of the mobile phone 1, the mobile phone 1 is in (i) the first state of (a) of Fig. 4 during standby and (ii) the second state of (b) of Fig. 4 during calling (emailing). In a case of using the multimedia functions such as the function of receiving one-segment broadcasting, the mobile phone 1 is mainly in the first state of (a) of Fig. 4.

The first outer housing 10 constitutes a body section serving as a main body of the mobile phone. As illustrated in (b) of Fig. 4, the first outer housing 10 has an operation surface 10a, which is exposed when the first outer housing 10 is slid outward with respect to the second outer housing 20.

Arranged on the operation surface 10a is a group of operation keys necessary for carrying out the functions of the mobile phone 1 such as the calling function or the emailing function. The group of operation keys serves as an input interface.

The second outer housing 20 constitutes an image displaying section which displays information (a telephone number, a moving image, a still image, an Internet browser screen, or the like) that the mobile phone 1 can display. The second outer housing 20 has a display surface 20a, which serves as an operation surface. The operation surface includes a touch panel, which a user can touch directly with his/her finger so as to carry out various operations.

As described above, the mobile phone 1 includes, as an input interface other than the group of operation keys arranged on the operation surface 10a of the first outer housing 10, the touch panel of the display surface 20a of the second outer housing 20. This enables the user to operate the mobile phone 1 even in a case where the mobile phone 1 is in the first state of (a) of Fig. 4. Note that, in a case where the display surface 20a of the second outer housing 20 is used as the operation surface, the mobile phone 1 is mainly in the first state in which the first outer housing 10 and the second outer housing 20 completely overlap each other as illustrated in (a) of Fig. 4; however, the state which the mobile phone 1 is mainly in when the display surface 20a is used as the operation surface is not limited to this.

As illustrated in Fig. 5, the mobile phone 1 includes a display (display panel) 101, a CPU 201, a ROM 202, a RAM 203, keys 114, a touch panel 104, a motion sensor 115, a timer 106, and a communication section 107.

The keys 114, the touch panel 104, and the motion sensor 115 are devices for detecting a user's input or operation.

The timer 106 is a device for measuring a time period taken for processes.

The communication section 107 is a device for carrying out a data communication over a network and establishing a telephone communication.

The display 101 is a device for displaying results of internal processing in devices so as to present the results to a user.

The CPU 201 is a device for controlling the above devices.

The ROM 202 is a storage device for storing a procedure (e.g., a program) necessary for the CPU 201 to carry out the control. The RAM 203 is a storage device for temporarily storing results of program execution when the CPU 201 carries out the control.

Fig. 6 is a functional block diagram illustrating blocks of the CPU 201, which blocks operate so as to control the devices of the mobile phone 1 having the above hardware configuration.

As illustrated in Fig. 6, the CPU 201 includes an input/operation detection section 211, a network management section 212, a time management section 213, a processing section 214, an enlarge window control section 215, a display rotation control section 216, a page information creating section 217, a screen information accumulation section 218, and a screen display control section 219. The programs for carrying out functions of these sections are stored in the ROM 202 and read out by the CPU 201 as needed, thereby causing these sections to carry out their functions.

The input/operation detection section 211 detects a state in which a user has operated the keys 114, the touch panel 104, or the motion sensor 115, and supplies, to the processing section 214 in a predetermined format, a piece of information indicative of the state.

The network management section 212 supplies, to the processing section 214 in a predetermined format, a piece of information received from the communication section 107. Further, the network management section 212 obtains the following piece of information from the communication section 107 in response to a request from the processing section 2 14.

The time management section 213 monitors an elapsed time with use of the timer 106 in response to a request from the processing section 214. When a requested time is reached, the time management section 213 supplies, to the processing section 214, a piece of information indicating that the requested time has been reached.

The processing section 214 determines what processes to carry out in accordance with the pieces of information supplied from the input/operation detection section 211, the network management section 212, and the time management section 213. Then, the processing section 214 sends requests for carrying out the processes to corresponding control and management sections (i.e., the enlarge window control section 215, the display rotation control section 216, and the page information creating section 217).

The enlarge window control section 215 displays, closes, and updates the enlarge window in response to the request from the processing section 214. Pieces of screen display information necessary for these processes are accumulated in the screen information accumulation section 218.

The display rotation control section 216 controls switching between portrait and landscape displays in response to the request from the processing section 214. In a case where the switching is to be carried out, a piece of screen display information necessary for the switching is created and accumulated in the screen information accumulation section 218.

The page information creating section 217 analyzes, in response to the request from the processing section 214, a piece of WEB page information obtained over a network, and creates a piece of screen display information. The piece of screen display information thus created is accumulated in the screen information accumulation section 218.

The screen information accumulation section 218 accumulates the pieces of screen display information therein in response to requests from the control sections. The screen information accumulation section 218 provides the pieces of screen display information thus accumulated in response to a request from outside.

The screen display control section 219 transfers, to the display 101, the pieces of screen display information accumulated in the screen information accumulation section 218 so as to cause the display section 101 to carry out screen displays corresponding to the pieces of screen display information thus transferred.

The mobile phone 1 configured like above is subjected to a process which is taking into consideration user-friendliness while for example a browser screen is being displayed. For example, assume that the mobile phone 1 is in the first state and the browser screen is being displayed on the display surface 20a. In this state, when a user touches the browser screen with a finger and holds the finger on the browser screen, then an area touched with the finger is enlarged (i.e., the browser screen is partially enlarged) to be twice as large as an original size and is displayed in a dedicated display window. Further, when the user drags the finger on the browser screen while keeping it in touch with the browser screen, a display in the display window is updated according to movement of a point touched with the finger.

When the user drags the finger to an end of the browser screen (or of a frame) and stops it at the end while keeping it in contact with the browser screen, the browser screen is scrolled so that an immediately preceding drag action continues. When the user releases the finger while a pointer displayed in a middle of the display window is on a certain element, the element will be selected. That is, when the user releases the finger at a position containing an anchor element (a link), the link will be selected.

The following description discusses an example of how a display is carried out when the Internet connecting function is used on the mobile phone 1. Note here that the Internet connecting function is a function of causing the mobile phone 1 to display an available browser on the display surface 20a. Since the mobile phone 1 in accordance with the present embodiment includes the touch panel, a user can scroll a browser screen, select a link, and the like by directly touching the touch panel.

Specifically, the mobile phone 1 is configured such that the following modes can be carried out in a switched-over manner: (i) a panning mode in which the browser screen is scrolled and (ii) a partial enlargement display mode for selecting a link.

The following description briefly discusses what operations are carried out on the browser screen of the mobile phone 1 in accordance with the present embodiment.

### (a) through (d) of Fig. 2 illustrate how the panning mode is carried out on the browser screen displayed on the display surface 20a of the mobile phone 1.

In a case where a finger starts dragging up, down, right, or left, a panning is carried out according to the subsequent dragging in a corresponding fixed direction (i.e., up and down or right and left) until the finger is released. For example, the panning is carried out so as to change a state of (a) of Fig. 2 to a state of (b) of Fig. 2.

On the other hand, in a case where a finger starts dragging in one of four diagonal directions, the panning is allowed in any direction. That is, the panning is carried out in a direction in which the finger drags. For example, the panning is carried out so as to change a state of (c) of Fig. 2 to a state of (d) of Fig. 2.

Note here that, in either case, a point P on a browser screen 21 is touched for a time period shorter than a predetermined time period. In a case where a substantially identical point is touched for a time period equal to or longer than the predetermined time period (e.g., in a case where a long-touch is made), the following partial enlargement display mode is carried out.

As described above, the panning mode and the partial enlargement display mode can be switched over in accordance with (i) a time period from a time when a point of the browser screen 21 started being touched and (ii) an amount of movement of the point being touched from the time when the point of the browser screen 21 started being touched.

Specifically, the predetermined period and a predetermined amount of movement, with reference to which it is determined whether or not the enlarge display means displays an enlarged view of the point being touched, can be set as appropriate. That is, such period and amount should be determined, in designing a display device, by taking into consideration various factors such as for how long a user should keep touching a point before an enlarged view is displayed so that the user feels comfortable.

A phrase "a time period measured by the timer is equal to or longer than a predetermined time period" means that the touch panel has been touched by a user for a certain period of time. Further, a phrase "an amount of movement calculated by movement amount calculating means is smaller than a predetermined amount" means that a point being touched by a user has little moved since it started being touched. That is, in the present embodiment, in a case where the point being touched by the user has little moved during a certain period of time since the point started being touched, an enlarged view of a predetermined area including the point being touched will be displayed such that the enlarged view is in a position different from that of the point being touched. A state like above, in which the both conditions are satisfied, is referred to as "a long-touched state".
(a) through (h) of Fig. 3 illustrate how partial enlargement display mode is carried out on the browser screen displayed on the display surface 20a of the mobile phone 1.
(a) of Fig. 3 illustrates how a point on a browser screen is long-touched by a user. Note here that the phrase "a point on a browser screen is long-touched" means that the point on the browser screen has been touched for a time period equal to or longer than a predetermined time period.
(b) of Fig. 3 illustrates how an enlarged view of an area including a touched point P at its center is displayed after the point P has been long-touched as illustrated in (a) of Fig. 3. Note in (b) of Fig. 3 that a display frame (hereinafter referred to as an enlarge window) 21a, in which an enlarged view of the point P having been long-touched is displayed, is displayed on the browser screen 21.

Note here that, although the enlarge window 21 a is preferably displayed near the point P being touched, it is not particularly limited as to where the enlarge window 21a is displayed.
(c) of Fig. 3 illustrates a state in which, when a user moves his/her finger in a direction indicated by an arrow while the enlarge window 21 a of (b) of Fig. 3 is being displayed, the enlarged view in the enlarge window 21a is updated according to the movement of the finger.
(d) of Fig. 3 illustrates a state in which the finger is on an item with a link on the browser screen 21 and the link is focused (i.e., a pointer points to a link). Note here that a position of a focus is fixed in a middle of the enlarge window 21a. That is, while the enlarge window 21a is being fixed on the browser screen 21, the enlarged view in the enlarge window 21a continuously changes. Then, when the link comes in the middle of the enlarge window 21a, the link is focused, i.e., it becomes possible to select the link.
(e) of Fig. 3 illustrates a state in which a display of the enlarge window 21a is canceled by making a flick action (action of quickly moving a finger) in the state of (d) of Fig. 3. The flick is detected on the basis of how fast the finger moves. That is, a flick is detected if the finger moves at a speed higher than a predetermined speed.

Note that, instead of making the flick action, the display of the enlarge window 21a can be canceled by making a touch action with another finger on any point of the browser screen 21.

Alternatively, the display of the enlarge window 21a can be canceled by instructing an enlarge display control section (enlarge display means) 111 to cancel the display of the enlarge window 21a by tilting the mobile phone 1, i.e., by causing the motion sensor 115 to supply a detection signal to the enlarge display control section 111.
(f) of Fig. 3 illustrates a state immediately after the finger is released from the browser screen 21 in the state of (d) of Fig. 3. Note here that, meanwhile, a browser control section (described later) is loading a linked page.
(g) of Fig. 3 illustrates a state in which a link selection is canceled in the state of (f) of Fig. 3.

On the other hand, (h) of Fig. 3 illustrates a state in which the linked page is displayed on the browser screen 21 after the state of (f) of Fig. 3.

The following description discusses hardware and software configurations for carrying out the above processes.

Fig. 1 is a block diagram schematically illustrating how the mobile phone 1 of the present embodiment is configured.

The mobile phone 1 includes a display 101, a display control section 102, a VRAM 103, a touch panel 104, a touch panel control section (touch detecting means) 105, a timer 106, a communication section 107, a browser 108, a frame buffer 109, a browser control section (link information obtaining means) 110, the enlarge display control section 111, a touch panel state storage section 112, and a control section (coordinate information obtaining means, movement amount calculating means) 113 (CPU 201).

The display 101 is a display device for displaying a screen image that the display control section 102 reads out from the VRAM 103. The display 101 includes a thin-film display panel such as a liquid crystal display panel or an organic EL (Electro Luminescence) panel.

The touch panel 104 is provided so as to be superimposed on the display 101, and serves as a sensor device for detecting user's actions such as a finger pressing, finger tracing, finger releasing, or the like.

The touch panel control section 105 monitors a state of the touch panel 104 at regular intervals that are notified by the timer 106, so as to obtain a piece of information indicative of (i) whether or not the touch panel 104 is pressed and (ii) coordinates of a pressed point on the touch panel 104. The touch panel control section 105 then stores the piece of information in the touch panel state storage section 112.

Further, the touch panel control section 105 compares the piece of information thus obtained with another piece of information which is previously stored in the touch panel state storage section 112. If the touch panel control section 105 has determined that a state in which the touch panel 104 is not pressed has been changed to a state in which the touch panel 104 is pressed, then the touch panel control section 105 notifies the browser control section 110 of a finger-in-touch event in combination with coordinates of a point being pressed. Similarly, if the touch panel control section 105 has determined that a state in which the touch panel 104 is pressed is continuing, then the touch panel control section 105 notifies the browser control section 110 of a finger-in-long-touch event in combination with coordinates of a point being pressed. If the touch panel control section 105 has determined that a state in which the touch panel 104 is pressed has been changed to a state in which the touch panel 104 is not pressed, then the touch panel control section 105 notifies the browser control section 110 of a finger-out-of-contact event in combination with coordinates of a point that had been pressed.

The communication section 107 obtains data such as HTML, a style sheet, a script, an image, and the like in conformity with an Internet protocol such as HTTP, and supplies the data to the browser 108.

The browser 108 has a function of interpreting the HTML, the style sheet, the script, and the like. The browser 108 analyzes the data supplied from the communication section 107, and stores a result of the analysis, which serves as a screen image, in the frame buffer 109. Further, in a case where the browser 108 is instructed by the browser control section 110 to make a scroll, the browser 108 creates a scrolled screen image. In a case where the browser 108 is notified of movement of a pointer by the browser control section 110, the browser 108 executes a script corresponding to coordinates of the pointer and/or changes a style to another style that corresponds to the coordinates of the pointer.

The browser control section 110 activates the browser 108, quits the browser 108, starts a communication, and notifies user's inputs so that a screen image is created and stored in the frame buffer 109. The browser control section 110 then transfers the screen image in the frame buffer 109 to the VRAM 103.

Further, the browser control section 110 controls the browser 108 in accordance with the events and the coordinates notified by the touch panel control section 105. In a case where (i) the finger-in-touch event is notified by the touch panel control section 105 and (ii) a distance from the coordinates at the time of the finger-in-touch event to coordinates notified after the event is equal to or longer than a predetermined distance, the browser control section 110 determines that the user has made a trace action. The browser control section 110 then instructs the browser 108 to make a scroll in a direction of the trace action.

In a case where a state, in which coordinates notified by the touch panel control section 105 are within a predetermined distance from the coordinates at the time of the finger-in-touch event, continues for a time period equal to or longer than a predetermined time period, the browser control section 110 determines that the user is keeping pressing a point on the touch panel 104. The browser control section 110 then instructs the enlarge display control section 111 to display an enlarged view of the point being pressed. Further, in a case where the browser control section 111 receives from the touch panel control section 105 a notification indicating that the point being pressed has moved while the enlarged view is being displayed, the browser control section 110 causes coordinates of a target to be enlarged to move according to the movement of the point being pressed. Meanwhile, the browser control section 110 notifies the browser 108 of movement of the pointer.

The enlarge display control section 111 creates, on a screen image that the browser 108 created in the frame buffer 109, an enlarged image by enlarging an area around a point indicated by the coordinates notified by the browser control section 110. The enlarge display control section 111 then synthesizes the enlarged image with the screen image to obtain an image, and writes the image into the VRAM 103.

The control section 113 is a control device for controlling overall operations of the devices, and controls for example electric power supply. The control section 113 is included in the CPU 201.

According to the present invention, as described earlier, the following two actions are allocated to an operation carried out by tracing the touch panel: (1) an action (panning mode) of scrolling a display screen in a direction of the tracing on the display screen and (2) an action (partial enlargement display mode) of notifying content with changes of coordinates of a pointer as is the case in which a pointer is moved to a browser screen.

According to this configuration, the timer 106 monitors coordinates of a point on the touch panel 104 for a certain period of time from a time when the point started being touched by a user. If the timer 106 finds out that the coordinates have moved by a distance equal to or longer than a predetermined threshold, then a scrolling action is allocated so that the display screen is scrolled in accordance with changes of the coordinates of the point being traced by the user. On the other hand, if the coordinates have moved by a distance shorter than the predetermined threshold, then an action of moving a pointer is allocated instead of the scrolling action. If the user carries out a tracing (i.e., if the coordinates of the point, on the touch panel 104, which is being touched have changed) after a certain period of time, changes of coordinates of a pointer are notified to the content.

As illustrated in (a) through (h) of Fig. 3, the present invention further has a function of displaying, at a time when a state is switched to the other state in which the action of moving the pointer is allocated, a point being traced by the user in a position different from that of the point being traced. Further, the present invention has a function of enlarging, when displaying the point being traced by the user, the point so that the point thus enlarged is displayed in a position different from that of the point being traced by the user.

The following description discusses, with reference to a flowchart of Fig. 7, how the processes are carried out.

First, a user presses the touch panel 104 (step S101). Next, it is determined whether or not an amount of movement of a point, of the touch panel 104, which is being pressed by the user is equal to or larger than a threshold amount at a time when a certain time period has elapsed (step S102). Note here that the threshold amount of movement is the earlier-described predetermined period.

If it has been determined that the amount of movement is equal to or larger than the threshold amount (Yes in step S102), a display screen is scrolled in a direction in which the point being pressed by the user has moved (step S103). The scroll is stopped (step S105) when the user stops pressing (i.e., releases a finger from) the touch panel 104 (step S104).

The foregoing description discussed the panning mode in which the display screen is scrolled by a user's trace action on the touch panel 104.

On the other hand, if it has been determined that the amount of movement is smaller than the threshold amount (No in step S102), then an enlarged view of the point being pressed by the user is displayed (step S106). Then, when the point, of the touch panel 104, which is being pressed by the user has moved (i.e., when the user traces the touch panel 104) (step S107), coordinates of the point being pressed by the user are notified to content (step S108).

Next, when the user stops pressing (i.e., releases a finger from) the touch panel 104 (step S109), a click action is notified to the content (step S110). That is, the user's action of stopping pressing the touch panel achieves an action equivalent to a click action on a PC etc., in which a cursor is placed on a target position and the target is clicked with a mouse.

The foregoing description discussed the processes of the partial enlargement display mode for displaying, by tracing the touch panel 104, an enlarged view of part of a display.

Fig. 8 is a flowchart illustrating how operations are carried out in a case where the present invention has a function in which an enlargement scale factor is gradually increased by keeping pressing a same point on the touch panel.

First, in step S201, the touch panel control section 105 notifies the browser control section 110 of (i) a state in which the touch panel is being long-pressed and (ii) coordinates of a point being pressed. Next in step S202, the browser control section 110 determines whether or not a distance from a point previously pressed to the point currently being pressed is equal to or longer than a threshold distance.

If it has been determined by the browser control section 110 that the distance is shorter than the threshold distance (No in step S202), the process proceeds to step S203. In step S203, it is determined whether or not an enlarged view of the point being pressed is being displayed.

If it has been determined that the enlarged view of the point is not being displayed (No in step S203), the process proceeds to step S204. If it has been determined that the time period is equal to or longer than the threshold period, then an enlarged view of an area around the point being pressed is displayed (step S206). Note that, in step S204, a time period from a time when the touch panel control section 105 notified a finger-in-touch event to a current time is found, and if the time period thus found is equal to or longer than a predetermined time period, then the enlarge display control section 111 is instructed to display the enlarged view of the point being pressed. If it has been determined that the time period from the time when the position started being pressed is shorter than the threshold period, then nothing is carried out (step S207).

On the other hand, if it has been determined that the enlarged view of the point is being displayed (Yes in step S203), the enlargement scale factor is increased (step S205). For example, in a case where a starting enlargement scale factor is 2, the enlargement scale factor is gradually increased to be 2.1, 2.2, 2.3, .... every time a long-pressed state is detected.

If the distance from the point previously pressed to the point currently being pressed is equal to or longer than the threshold distance (Yes in step S202), i.e., in a case where a browser screen is being scrolled, it is determined whether or not an enlarged view is being displayed (step S208).

If it has been determined in step S208 that the enlarged view is being displayed while the browser screen is being scrolled, the browser control section 110 instructs the enlarge display control section 111 to move, according to the movement of the coordinates of the point being pressed, coordinates of a target to be enlarged. The browser control section 110 further notifies the browser 108 of movement of a pointer (step S210).

On the other hand, if it has been determined in step S208 that the enlarged view is not being displayed, the browser control section 110 instructs the browser 108 to scroll the browser screen in accordance with the movement of the coordinates of the point being pressed (step S209). For example, in a case where the coordinates of the point being pressed are moved from up to down, the browser control section 110 instructs to scroll a display also from up to down.

As has been described, according to the mobile phone 1 configured like above, a user can switch over two actions (i.e., the panning mode and the partial enlargement display mode) by carrying out a simple operation of pressing and holding a touch panel. Further, since it is not necessary for the touch panel to have a special area such as a button etc. for switching between the actions, content is displayed without being affected by such an area.

Further, the user can not only recognize that the actions are switched, but also easily recognize what is displayed in an area that is behind a finger etc. and therefore is hard to see.

Furthermore, even in a case of a terminal including a high-definition liquid crystal such as the mobile phone 1, an enlarged view enables a user to easily recognize what is displayed in an area selected by the user.

The mobile phone 1 configured like above can be configured such that the enlarge display control section 111 (enlarge display means) cancels the enlarged view in a case where the touch panel control section 105 (touch detecting means) detects, while the enlarged view is being displayed, a state in which the touch panel 104 is no longer touched.

According to the configuration, the enlarged view is being displayed while the user keeps touching the touch panel 104. This causes the predetermined area displayed in the enlarged view to be changed according to movement of the finger when the user makes a trace action on the touch panel 104. Accordingly, after the user causes the enlarged view to be displayed, the user simply needs to make a trace action on the touch panel 104 while keeping his/her finger in contact with the touch panel 104 so as to view an enlarged view of an area touched with his/her finger.

The mobile phone 1 can further include: a browser control section 110 (link information obtaining means) for obtaining, when a link contained in an image displayed on the display panel 101 is selected, information associated with the link thus selected, the link information obtaining means obtaining the information associated with the link when the enlarged view is canceled by the enlarge display control section 111 while the link, which is included in the predetermined area displayed in the enlarged view, is in a state in which the link can be selected.

According to this configuration, even in a case of a display device with a small screen such as that of a mobile terminal, it is possible to surely select a target link while recognizing an entire browser screen.

The mobile phone 1 can be configured such that link information obtaining means determines, when the link comes to a predetermined position in the enlarged view, that the link is in the state in which the link can be selected.

For example, in a case where a selector equivalent to a pointer is set in a middle of a display frame of the enlarged view, the link included in the enlarged view goes into the state in which the link can be selected when the link comes to the middle of the display frame. Under this condition, when the user release his/her finger from the touch panel, information associated with the link thus selected will be obtained.

The mobile phone 1 can be configured such that, in a case where (i) the enlarged view is being displayed and (ii) an amount of movement of the point calculated by the control section 113 (movement amount calculating means) is smaller than a predetermined amount, the enlarge display control section 111 changes an enlargement scale factor of the enlarged view in accordance with a time period measured by the timer 106.

Note here that the enlarge display means preferably increases the enlargement scale factor in predetermined increments every time a time period from a time when the enlarged view started being displayed, which time period is measured by the timer, reaches a certain time. For example, assume that a time interval at which the enlargement scale factor is increased is one (1) second. In this case, the enlarged view is displayed in such a manner that the enlargement scale factor of the enlarged view is increased in the predetermined increments every one (1) second from a time when the enlarged view started being displayed with a starting enlargement scale factor in response to a touch action. A relation between the increments of the enlargement scale factor and the time interval at which the enlargement scale factor is increased can be determined as appropriate by taking into consideration user friendliness etc.

The display device is suitably applicable to a mobile terminal capable of connecting with a communications network, said mobile terminal, including: a display device for displaying information obtained via the communications network.

The invention is not limited to the description of the embodiments above, but may be altered within the scope of the claims. An embodiment based on a proper combination of technical means disclosed in different embodiments within the scope of the claims is encompassed in the technical scope of the invention.

Lastly, the various blocks in the mobile phone 1, especially the control section 113 of the CPU 201 can be implemented by hardware or software executed by a CPU as follows.

Namely, the control section 113 includes a CPU (central processing unit) and memory devices (storage media). The CPU executes instructions contained in control programs so as to realize various functions. The memory devices may be a ROM (read-only memory) containing programs, a RAM (random access memory) to which the programs are loaded, or a memory containing the programs and various data. An object of the present invention can be achieved also by mounting, to the control section 113, a computer-readable storage medium containing control program code (executable programs, intermediate code programs, or source programs) for control programs for the control section 113, which control programs are software implementing the aforementioned functions, in order for a computer (or CPU, MPU) of the control section 113 to retrieve and execute the program code contained in the storage medium.

The storage medium can be, for example, a tape, such as a magnetic tape or a cassette tape; a magnetic disk, such as a floppy® disk or a hard disk, or an optical disc, such as a CD-ROM/MO/MD/DVD/CD-R; a card, such as an IC card (including memory card) or an optical card; or a semiconductor memory, such as a mask ROM/EPROM/EEPROM/flash ROM.

The control section 113 can be arranged to be connectable to a communications network so that the program code is delivered over the communications network. The communications network is not limited in any particular manner, and can be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and can be, for example, a wired line, such as IEEE 1394, USB, an electric power line, a cable TV line, a telephone line, or an ADSL; or wireless, such as infrared (IrDA, remote control), Bluetooth®, 802.11 wireless, HDR, a mobile telephone network, a satellite line, or a terrestrial digital network. The present invention can be realized also by the program code in the form of a computer data signal embedded in a carrier wave which is embodied by electronic transmission.

### Industrial Applicability

The present invention makes it possible to improve user-friendliness of a display device that has a small display area and includes a touch panel. Accordingly, the present invention is effectively applicable to a mobile terminal such as for example a mobile phone or a PDA.

### Reference Signs List

- 1: Mobile phone
- 10: First outer housing
- 10a: Operation surface
- 20: Second outer surface
- 20a: Display surface
- 21: Browser screen
- 21a: Enlarge window
- 101: Display
- 102: Display control section
- 103: VRAM
- 104: Touch panel
- 105: Touch panel control section
- 106: Timer
- 107: Communication section
- 108: Browser
- 109: Frame buffer
- 110: Browser control section
- 111: Enlarge display control section
- 112: Touch panel state storage section
- 113: Control section
- 114: Key
- 115: Motion sensor
- 201: CPU
- 202: ROM
- 203: RAM
- 211: Input/operation detection section
- 212: Network management section
- 213: Time management section
- 214: Processing section
- 215: Enlarge window control section
- 216: Display rotation control section
- 217: Page information creating section
- 218: Screen information accumulation section
- 219: Screen display control section

## Claims

1. A display device, comprising:
a display panel; and
a touch panel,
the display panel and the touch panel being provided so as to be superimposed on each other,
said display device, further comprising:
touch detecting means for detecting a state in which a point on the touch panel is touched;
a timer for measuring a time period from a time when the touch detecting means detects the state in which the point on the touch panel is touched;
coordinate information obtaining means for obtaining coordinate information indicative of coordinates on the display panel, the coordinates corresponding to the point on the touch panel detected by the touch detecting means;
movement amount calculating means for calculating, from the coordinate information obtained by the coordinate information obtaining means, an amount of movement of the point; and
enlarge display means for displaying, in a case where (i) the time period measured by the timer is equal to or longer than a predetermined time period and (ii) the amount of movement calculated by the movement amount calculating means is smaller than a predetermined amount, an enlarged view of a predetermined area such that the enlarged view is displayed on the display panel in a position different from a position corresponding to the point, the predetermined area having, at its center, the coordinates indicated by the coordinate information.

2. The display device according to claim 1, wherein the enlarge display means cancels the enlarged view in a case where the touch detecting means detects, while the enlarged view is being displayed, a state in which the touch panel is no longer touched.

3. A display device according to claim 2, further comprising:
link information obtaining means for obtaining, when a link included in an image displayed on the display panel is selected, information associated with the link thus selected,
the link information obtaining means obtaining the information associated with the link when the enlarged view is canceled by the enlarge display means while the link, which is included in the predetermined area displayed in the enlarged view, is in a state in which the link can be selected.

4. The display device according to claim 3, wherein the link information obtaining means determines, when the link comes to a predetermined position in the enlarged view, that the link is in the state in which the link can be selected.

5. The display device according to claim 1, wherein, in a case where (i) the enlarged view is being displayed and (ii) an amount of movement of the point calculated by the movement amount calculating means is smaller than a predetermined amount, the enlarge display means changes an enlargement scale factor of the enlarged view in accordance with a time period measured by the timer.

6. The display device according to claim 5, wherein the enlarge display means increases the enlargement scale factor in predetermined increments every time a time period from a time when the enlarged view started being displayed, which time period is measured by the timer, reaches a certain time.

7. A mobile terminal capable of connecting with a communications network, said mobile terminal, comprising:
a display device for displaying information obtained via the communications network,
the display device being a display device recited in any one of claims 1 through 6.
